# EUROPÄISCHE PATENTANMELDUNG

(11) **EP 2 535 517 A2**
(43) Veröffentlichungstag der Anmeldung: **19.12.2012**
(21) Anmeldenummer: 12004445.8
(22) Anmeldetag: 12.06.2012
(51) Int. Cl.: F01D 5/30, F01D 5/32

(54) **Rotorvorrichtung für ein Strahltriebwerk mit einem Scheibenrad und mehreren Laufschaufeln**

(30) Priorität: 14.06.2011 DE 102011077501
(71) Anmelder: Rolls-Royce Deutschland Ltd & Co KG, 15827 Blankenfelde-Mahlow (DE)
(72) Erfinder: Gerstberger, Ulf Dr., 12161 Berlin (DE)

(57) **Zusammenfassung**

Es wird eine Rotorvorrichtung (9) für ein Strahltriebwerk mit einem Scheibenrad und mehreren mit dem Scheibenrand verbundenen Laufschaufeln (14) vorgeschlagen, wobei die Laufschaufeln (14) jeweils über einen Schaufelfuß (15) in im Wesentlichen axialer Richtung in Ausnehmungen (16) des Scheibenrades angeordnet sind. Zur axialen Sicherung der Laufschaufeln (14) in den Ausnehmungen (16) des Scheibenrades (13) sind mehrere Sicherungssegmente (17) vorgesehen, welche einerseits mit Fugen (21) der Laufschaufeln (14) und andererseits mit wenigstens einer Fuge (19) des Scheibenrades zusammenwirken. Im Bereich der Fuge (21) wenigstens einer der Laufschaufeln (14) liegt zwischen der Fuge (21) der Laufschaufel (14) und einem Sicherungssegment (17) ein eine Relativbewegung zwischen den Laufschaufeln (14) und den Sicherungssegmenten (17) verhindernder Formschluss vor.

## Beschreibung

Die Erfindung betrifft eine Rotorvorrichtung für ein Strahltriebwerk mit einem Scheibenrad und mehreren mit dem Scheibenrad verbundenen Laufschaufeln gemäß der im Oberbegriff des Patentanspruches 1 näher definierten Art.

Aus der Praxis sind Strahltriebwerke mit Turbinenkonstruktionen bekannt, bei denen Laufschaufeln jeweils über so genannte Tannenbaumfüße in Aufnahmeschienen des Scheibenrades angeordnet sind, wobei die Aufnahmeschienen in axialer Richtung in dem Scheibenrad verlaufen. Um die Laufschaufeln in dieser Position in axialer Richtung zu sichern und zusätzlich möglichst geringe Leckageströme im Luftsystem während eines Betriebs des Strahltriebwerks zu verursachen, ist ein mit mehreren in Umfangsrichtung des Scheibenrades nebeneinander angeordneten Sicherungssegmenten ausgebildeter Sicherungsring vorgesehen. Die Sicherungssegmente stützen sich im Betrieb unter der Gewichtslast auf eine oder mehrere Laufschaufeln ab. Die Sicherungssegmente sind in radialer Richtung einenends in unterhalb des inneren Deckbands der Laufschaufeln angeordneten Fugen und anderenends in einer in dem Scheibenrad vorgesehenen Fuge gelagert. Die den Fugen der Laufschaufeln zugewandte und in die Fugen eingreifende Oberflächen der Sicherungssegmente sind konzentrisch zu einem Mittelpunkt des Scheibenrads ausgebildet. Die den Sicherungssegmenten zugewandten Oberflächen der Fugen der Laufschaufeln sind üblicherweise gradlinig ausgebildet.

Jeweils eine Position und Ausdehnung eines Kontaktbereichs zwischen der der Fuge in den Laufschaufeln zugewandten konzentrischen Oberfläche eines Sicherungssegmentes und der dem Sicherungssegment zugewandten gradlinigen Oberfläche der Fuge einer zugewandeten Laufschaufcl ist nachteilhafterweise nicht klar definiert, da sich der Kontaktbereich zwischen einem Sicherungssegment und einer Laufschaufel während eines Betriebs des Strahltriebwerks selbst einstellen kann. Des Weiteren besteht auch die Möglichkeit, dass sich eine Kontaktfläche zwischen einem Sicherungssegment und einer Laufschaufel im Wesentlichen abhängig von einer Lage der Laufschaufel relativ zu einer Umfangskontur des jeweils zugeordneten Sicherungssegmentes des Sicherungsrings verändert, da sich die Position der Sicherungssegmente während eines Betriebs des Strahltriebwerks in Umfangsrichtung gegenüber den Laufschaufeln aufgrund einer Relativbewegung zwischen den in Umfangsrichtung des Scheibenrades festgelegten Laufschaufeln und den in den Fugen in Umfangsrichtung des Scheibenrades vorschiebbaren Sicherungssegmenten verlagern können.

Die Relativbewegung zwischen den Sicherungssegmenten und den Laufschaufeln führt unter Umständen dazu, dass der Kontaktbereich zwischen einer Laufschaufel und einem Sicherungssegment im Bezug auf einen Tannenbaumfuß der Laufschaufel in Umfangsrichtung außermittig angeordnet ist, was zu einer ungünstigen Lastangriffsposition führt. In einem derartigen Fall wirken auf den Tannenbaumfuß zusätzliche Biegespannungen und - moment, die bei Laufschaufeln mit einem großen Plattformüberhang besonders groß sind und eine Lebensdauer der Laufschaufeln und des Scheibenrades in unerwünschtem Umfang herabsetzen.

Um einen definierten Kontaktbereich zwischen der Laufschaufel und dem Sicherungssegment erzielen und die beschriebenen Biegespannungen vermeiden bzw. reduzieren zu können, sind profiliert ausgebildete Sicherungssegmente bekannt. Zur Sicherstellung einer Position der Sichcrungssegmente gegenüber den Laufrädern in Umfangsrichtung des Scheibenrades sind diese gegen ein Verdrehen im Betrieb mit Schrauben und Pins gesichert. Diese Maßnahme verursacht jedoch hohe Herstellungskosten.

Der vorliegenden Erfindung liegt daher die Aufgabe zugrunde, eine Rotorvorrichtung für ein Strahltriebwerk mit einem Scheibenrad und mehreren mit dem Scheibenrad verbundenen Laufschaufeln, welche über Sicherungssegmenle in axialer Richtung gegenüber dem Scheibenrad gesichert sind, zur Verfügung zu stellen, bei der die Sicherungssegmente auf einfache Weise gegen ein Verdrehen gegenüber den Laufschaufeln gesichert sind und jeweils ein definierter Anlagebereich zwischen den Sicherungssegmenten und den Laufrädern über den gesamten Betriebsbereich der Rotorvorrichtung vorliegt.

Erfindungsgemäß wird diese Aufgabe mit einer Rotorvorrichtung mit den Merkmalen des Patentanspruches 1 gelöst.

Bei der erfindungsgemäßen Rotorvorrichtung für ein Strahltriebwerk mit einem Scheibenrad und mehreren mit dem Scheibenrad verbundenen Laufschaufeln sind die Laufschaufeln jeweils über einen Schaufelfuß in im Wesentlichen axialer Richtung in Ausnehmungen des Scheibenrades angeordnet, wobei zur axialen Sicherung der Laufschaufeln in den Ausnehmungen des Scheibenrades mehrere Sichorungssegmente vorgesehen sind, welche einerseits in definierten Kontaktbereichen mit Fugen der Laufschaufeln und andererseits mit wenigstens einer Fuge des Scheibenrades zusammenwirken.

Erfindungsgemäß liegt im Bereich der Fuge wenigstens einer der Laufschaufeln zwischen der Fuge der Laufschaufol und einem Sicherungssegment ein eine Relativbewegung zwischen den Laufschaufeln und den Sicherungssegmenten verhindernder Formschluss vor, d. h., eine den Laufschaufeln zugewandte Kontur der Sicherungssegmente und eine den Sicherungssegmenten zugewandte Kontur der Fuge der Laufschaufeln sind zur Verhinderung einer Verdrehung der Sicherungssegmente relativ zu den Laufschaufeln aufeinander abgestimmt ausgebildet.

Damit wird auf konstruktiv einfache Art und Weise ein Verdrehen der Sicherungssegmente des Sicherungsrings relativ zu den Laufschaufeln insbesondere während eines Betriebs der Rotorvorrichtung ohne zusätzliche Mittel zur Festlegung der Sicherungssegmente gegenüber den Laufschaufeln sichergestellt, so dass eine Montage der Sicherungssegmente einfach und schnell durchzuführen ist und jeweils ein definierter Anlagebereich zwischen den Sicherungssegmenten und den Laufschaufeln über den gesamten Betriebsbereich der Vorrichtung erhalten bleibt. Kosten für die Fertigung der Sicherungssegmente können zudem gegenüber den aus dem Stand der Technik bekannten Sicherungssegmenten mit einer profilierten Kontur geringer ausfallen, da zur Herstellung der profilierten Kontur mehrere aufeinanderfolgende Fertigungsschritte erforderlich sind.

Die erfindungagemäße Rotorvorrichtung kann für verschieden ausgeführte Triebwerke eingesetzt werden und findet insbesondere bei einer beliebigen Stufe einer Turbine Anwendung. Weiterhin kann die erfindungsgemäße Rotorvorrichtung beispielsweise auch bei einem Verdichter oder einem Bläser eines Triebwerks zum Einsatz kommen.

Bei einer konstruktiv einfachen und kostengünstig herstellbaren Ausführung einer erfindungsgemäßen Rotorvorrichtung ist ein einem Sicherungssegment zugewandter Bereich der Fuge der Laufschaufel mit einem insbesondere zahnförmigen Profilkörper ausgebildet.

Eine Relativbewegung zwischen der Laufschaufel und dem Sicherungssegment wird bei einer vorteilhaften Weiterbildung der Erfindung mit einem einen dreiecksförmigen Bereich aufweisenden Profilkörper verhindert, der hierfür einen Anschlagbereich für eine mit dem dreiecksförmigen Bereich des Profilkörpers korrelierende dreiecksförmige Aussparung des Sicherungssegments bildet.

Bei einer jeweils einen definierten Anlagebereich zwischen den Lautschauteln und den Sicherungssegmenten und damit eine günstige Krafteinleitung gewährleistenden Ausgestaltung einer Rotorvorrichtung mit einer Verdrehsicherung der Sicherungssegmente gegenüber den Laufschaufeln ist es vorgesehen, dass der dreiecksförmige Bereich des Profilkörpers im Querschnitt von sich in einem Schnittpunkt schneidenden Laufschaufelkanten gebildet ist, wobei eine erste Laufschaufelkante in Umfangsrichtungsrichtung der Laufschaufel gegenüber einer Plattform der Laufschaufel geneigt ist, und eine zweite Laufschaufelkante sich ausgehend von dem in radialer Richtung von einem Fugengrund am weitesten erstreckender Schnittpunkt der Laufschaufelkanten in Richtung des Fugengrundes erstreckt, und wobei die dreiecksförmige Aussparung des Sicherungssegments im Querschnitt von zwei sich in einem Schnittpunkt schneidenden Sicherungssegmentkanten gebildet wird und der Profilkörper zur Verdrehsicherung der Laufschaufel relativ gegenüber dem Sicherungssegment im Bereich des Schnittpunkts einen Anschlag für das Sicherungssegment bildet und in diesem Bereich wenigstens annähernd mit einem den Schnittpunkt des Sicherungssegments umfassenden Bereich des Sicherungssegments zusammenwirkt.

Der in radialer Richtung am weitesten von dem Fugengrund der Fuge einer Laufschaufel beabstandete Punkt der ersten Laufschaufelkante bildet einen definierten Anlagepunkt für ein zugeordnetes Sicherungssegment, wobei das Sicherungssegment im Bereich dieses Punktes gegen eine unerwünschte Verdrehung in Umfangsrichtung des Scheibenrades gegenüber der Laufschaufel an dem Profilkörper abstützt ist. Durch die relativ zu einer Unterkante des inneren Deckbands der Laufschaufeln geneigte, in Richtung des Sicherungssegments weisende Oberfläche der Fuge der Laufschaufel zusammen mit der winkligen Anordnung der Laufschaufelkanten bzw. der Sicherungssegmentkanten zueinander ist ein sicherer Verdrehschutz des Sicherungssegments gegenüber der Laufschaufel geschaffen, wobei die Lagesicherung auch bei größeren Fertigungstoleranzen sichergestellt ist.

Bei einer vorteilhaften Weiterbildung einer erfindungsgemäßen Rotorvorrichtung verläuft die erste Sicherungssegmentkante des Sicherungssegments zur Bildung eines Kontaktbereichs zwischen der Laufschaufel und dem Sicherungssegment bereichsweise parallel zu der ersten Laufschaufelkante des Profilkörpers der Laufschaufel. Durch diese Ausgestaltung wird auf einfache Weise ein definierter Bereich geschaffen, in welchem eine Anlage zwischen dem Sicherungssegment und der Laufschaufel insbesondere in einem Betriebszustand der Rotorvorrichtung vorliegt. Gegenüber bekannten Ausführungen, bei denen die Fuge der Laufschaufel in einem Arbeitsgang hergestellt und überschüssiges Material im Bereich der Fuge bzw. des Schaufelfußes stehen gelassen oder in einem weiteren Arbeitsgang abgetragen wird, können die Fertigungskosten und/oder das Gewicht der Laufschaufel bei der erfindungsgemäßen Lösung reduziert werden. Eine Gewichtsreduktion ist insbesondere dadurch möglich, dass durch die Anstellung bzw. Neigung des Profilkörpers der Fuge und die Schaffung eines definierten Kontaktbereichs zwischen dem Sicherungssegment und der Laufschaufel nicht lasttragendes Material der Laufschaufel entfernt werden kann.

Bei einer vorteilhaften Weiterbildung der Erfindung ist ein Mittelpunkt des Kontaktbereichs der ersten Sicherungssegmentkante und der ersten Laufschaufelkante wenigstens annähernd mittig zu dem Schaufelfuß der Laufschaufel in Umfangsrichtung der Rotorvorrichtung angeordnet. Durch eine derartige Anordnung des Schaufelfußes können auf den Schaufelfuß wirkende Biegespannungen reduziert oder vollständig verhindert werden, welche bei einer bezüglich des Schaufelfußes außermittigen Krafteinwirkung auf die Laufschaufel entstehen.

Da die Laufschaufeln und die Sicherungssegmente folglich keinen oder nur geringen Biegespannungen standhalten müssen, können die Laufschaufeln und die Sicherungssegmente vorteilhafterweise leicht ausgebildet werden und/oder weisen eine höhere Lebensdauer auf. Die Sicherungssegmente können zur Gewichtsreduktion beispielsweise mit Aussparbohrungen ausgebildet sein. Ein Lebensdauerzugewinn ist bei Laufschaufeln mit einem großen Plattformüberhang, wie beispielsweise bei Rotorvorrichtungen mit geringen Laufschaufelanzahlen besonders groß, da bei diesen Vorrichtungen durch den großen Plattformüberhang besonders große Biegespannungen vermieden werden können.

Insbesondere um einen Kontaktbereich des Sicherungssegments mit der Laufschaufel in einem gewünschten Umfangsbereich der Laufschaufel anordnen zu können, ist es bei einer einfachen Ausgestaltung der erfindungsgemäßen Rotorvorrichtung vorgesehen, dass ein Schnittpunkt der ersten Laufschaufelkante mit der zweiten Laufschaufelkante in einem Randbereich der Laufschaufel angeordnet ist.

Zur Definition eines eine gewünschte Länge aufweisenden Kontaktbereiches zwischen der Laufschaufel und dem Sicherungssegment kann das Sicherungssegment im Querschnitt eine dritte Sicherungssegmentkante aufweisen, welche sich bezüglich des Schnittpunktes der ersten Sicherungssegmentkante und der zweiten Sicherungssegmentkante abweisender Richtung an die erste Sicherungssegmentkante anschließt, wobei die dritte Sicherungssegmentkante zu der ersten Laufschaufelkante, insbesondere durch eine hierzu winkelige Anordnung, beabstandet verläuft. Der Abstand zwischen der dritten Sicherungssegmentkante und der ersten Laufsehaufelkante ist dabei insbesondere gering, so dass die dritte Sicherungssegmentkante in einem Übergangsbereich zwischen zwei benachbarten Laufschaufeln in radialer Richtung sehr nah an den Fugengrund der Fuge der Laufschaufel heranreicht und hierdurch eine gute Dichtwirkung erzielbar ist. Auf einen Einsatz von zusätzlichen Dichtungs- und/oder Dämpfungseinrichtungen zwischen benachbarten Laufschaufeln kann hierdurch verzichtet werden bzw. die Dichtungs- und/oder Dämpfungseinrichtungen können besonders klein und/oder einfach ausgebildet werden.

Bei einer vorteilhaften Weiterbildung einer erfindungsgemäßen Rotorvorrichtung erstreckt sich die dritte Sicherungssegmentkante in Umfangsrichtung der Rotorvorrichtung über einen Übergangsbereich von benachbarten Laufschaufel hinaus, so dass eine Dichtwirkung der Sicherungssegmente weiter verbessert ist.

Die zweite Sicherungssegmentkante des Sicherungssegments verläuft bei einer vorteilhaften Ausführung einer erfindungsgemäßen Rotorvorrichtung zu der zweiten Laufschaufelkante der Laufschaufel beabstandet, insbesondere durch eine winklige Anordnung gegenüber der zweiten Laufschaufelkante, so dass ein Kontakt des Profilkörpers mit dem Sicherungssegment im Bereich der zweiten Laufschaufelkante und der zweiten Sicherungssegmentkante vermieden wird.

Bei einer konstruktiv einfach herstellbaren Ausgestaltung der Erfindung verläuft eine oder verlaufen insbesondere alle Kanten der Laufschaufel und/oder des Sicherungssegments wenigstens annähernd geradlinig. Alternativ hierzu können aber auch kurvenförmige Verläufe der jeweiligen Kanten vorgesehen sein, wobei die Verläufe der Kanten jeweils zur Erzielung der oben beschriebenen Vorteile aufeinander abgestimmt sind.

Um nur geringe Krafteinwirkungen auf einen einzelnen Profilkörper bei der Verdrehsicherung der Sicherungssegmente gegenüber den Laufschaufeln zu erzeugen, können mehrere, insbesondere alle Laufschaufeln eine Fuge mit einem Profilkörper aufweisen und jeweils mit einem eine dreiecksförmige Aussparung umfassenden Bereich eines Sicherungssegments zusammenwirken. Die Sicherungssegmente können dabei mit einem eine dreiecksförmige Aussparung umfassenden Bereich ausgebildet sein und mit einer einzigen Laufschaufel zusammenwirken. Alternativ hierzu kann ein Sicherungssegment mehrere dreiecksförmige Aussparungen umfassende Bereiche aufweisen und sich über mehrere, insbesondere zwei oder drei Laufschaufeln erstrecken und über deren Profilkörper mit den Laufsschaufeln zusammenwirken.

Um die Sicherungssegmente auf einfache Weise in die Fuge der Laufschaufel und die Fuge des Scheibenrades einführen zu können, weisen die Sicherungssegmente bei einer konstruktiv einfachen Ausgestaltung der erfindungsgemäßen Rotorvorrichtung in einem der Fuge des Scheibenrades zugewandten Bereich wenigstens einen Fortsatz auf, welcher zwischen einer zur Einführung des Sicherungssegments in die Rotorvorrichtung ersten Position und einer zweiten Position bei eingeführtem Sicherungssegment verlagerbar, insbesondere biegbar ist, wobei, eine radiale Erstreckung des Sicherungssegments mit dem sich in der zweiten Position befindlichen Fortsatz größer als mit dem sich in der ersten Position befindlichen Fortsatz ist.

Alternativ hierzu kann in radialer Richtung zwischen dem Sicherungssegment und der Fuge des Scheibenrades ein in Umfangsrichtung der Rotorvorrichtung verlaufendes Abstandselement, insbesondere ein Draht, angeordnet sein.

Zur axialen Sicherung und/oder Dichtung der Laufschaufeln gegenüber dem Scheibenrad können bei einer Weiterbildung der Erfindung in axialer Richtung beidseits der Laufschaufeln Sicherungssegmente anbeordnet sein, welche jeweils in Fugen der Laufschaufeln und in wenigstens einer Fuge des Scheibenrades angeordnet sind.

Um eine verbesserte Abdichtung zwischen benachbarten Laufschaufeln zu erzielen, ist es bei einer vorteilhaften Weiterbildung einer erfindungsgemäßen Rotorvorrichtung vorgeschen, dass im Bereich eines Spalts zwischen inneren Deckbändern von zwei benachbarten Laufschaufeln wenigstens ein Dichtungs- und/oder Dämpfungselement angeordnet ist.

Sowohl die in den Patentansprüchen angegebenen Merkmale als auch die in den nachfolgenden Ausführungsbeispielen der erfindungsgemäßen Rotorvorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Rotorvorrichtung ergeben sich aus den Patentansprüchen und den nachfolgend unter Bezugnahme auf Zeichnung prinzipmäßig beschriebenen Ausführungsbeispielen.

Es zeigt:
- Fig. 1: eine stark schematisierte Längsschnittansicht eines Strahltriebwerkes, welches eine Turbine mit mehreren erfindungsgemäß ausgebildeten Rotorvorrichtungen aufweist;
- Fig. 2: eine vereinfachte Schnittansicht einer Rotorvorrichtung der Fig. 1 mit einem Scheibenrad und einer damit verbundenen Laufschaufel, wobei die Laufschaufel über ein Sicherungssegment an dem Scheibenrad in axialer Richtung festgelegt ist;
- Fig. 3: eine vereinfachte dreidimensionale Ansicht der Laufschaufel gemäß Fig. 2, wobei eine ohne eine Kurvatur in radialer Richtung gezeigte Fuge der Laufschaufel zur Anordnung eines Sicherungssegments des Sicherungsrings näher ersichtlich ist;
- Fig. 4: ein Ausschnitt einer vereinfachten Seitenansicht auf die Rotorvorrichtung der Figuren 1 bis 3; und
- Fig. 5: eine vereinfachte Darstellung eines Ausschnitts der Rotorvorrichtung der Figuren 1 bis 4, wobei ein Zusammenwirken eines Sicherungssegments des Sicherungsrings mit der Laufschaufel näher ersichtlich ist.

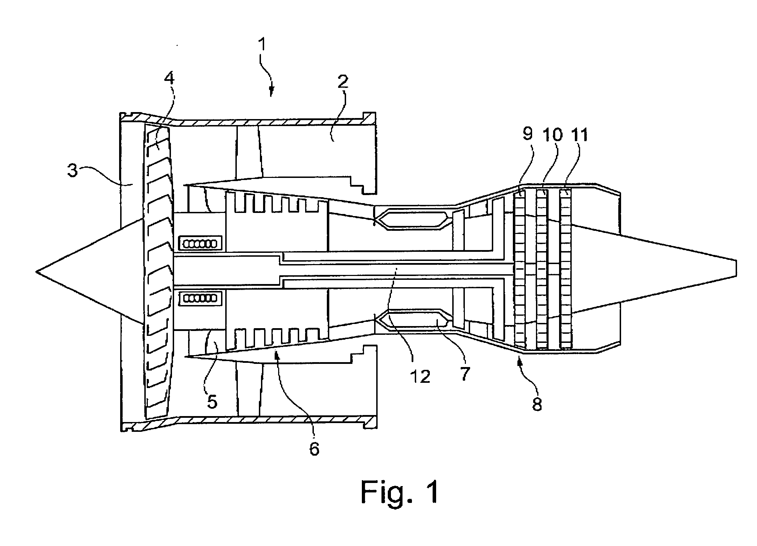

In Fig. 1 ist ein Strahltriebwerk 1 in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10, 11 auf, welche in im Wesentlichen vergleichbarer Bauweise ausgebildet sind, wobei die Rotorvorrichtung 9 im Folgenden stellvertretend für die anderen Rotorvorrichtungen 10, 11 näher beschrieben wird.

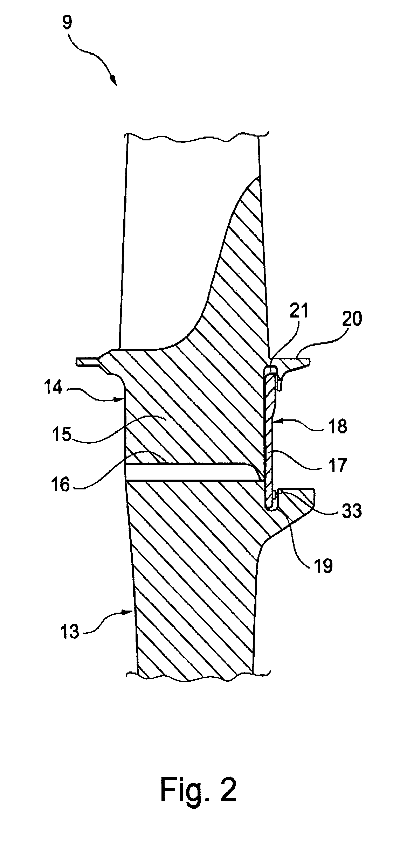

Die Rotorvorrichtung 9, welche in der Fig. 2 in einer Schnittdarstellung ersichtlich ist, weist ein zentral angeordnetes und mit einer Triebwerksachse 12 verbundenes Scheibenrad 13 auf, an welchem in radial äußeren Bereichen umfangsseitig eine Vielzahl von Laufschaufeln 14 angeordnet sind. Die Laufschaufeln 14 weisen jeweils einen hier nur schematisch ersichtlichen und als Tanncnbaumfuß 15 ausgebildeten Schaufelfuß auf, welcher jeweils in einer der in im Wesentlichen axialer Richtung in dem Scheibenrad 13 verlaufenden und mit den Tannenbaumrüßen 15 korrelierenden Ausnehmungen 16 des Scheibenrads 13 angeordnet ist.

Zur axialen Sicherung der Laufschaufeln 14 gegenüber dem Scheibenrad 13 ist ein mit mehreren Sicherungssegmenten 17 ausgebildeter ebener Sicherungsring 18 vorgesehen, welcher im Bereich der Tannenbaumfüße 15 der Laufschaufeln 14 einerseits in eine durchgängig in dem Scheibenrad 13 angeordneten Fuge 19 und andererseits in unterhalb eines inneren Deckbands 20 bzw. einer Plattform der Laufachaufeln 14 angeordneten und in Umfangsrichtung des Scheibenrades verlaufenden Fugen 21 der Laufschaufeln 14 eingreift.

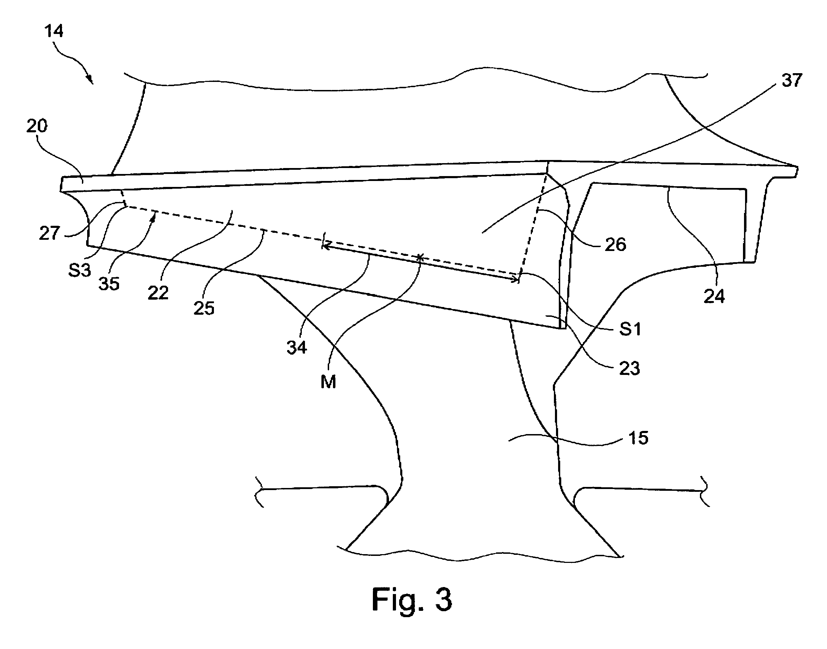

In Fig. 3 ist ein Ausschnitt der Laufschaufel 14 mit einer in Umfangsrichtung des Scheibenrades 13 verlaufenden Fuge 21 näher ersichtlich, wobei die Fuge 21 einen unter dem im Wesentlichen konzentrisch zu der Triebwerksachse 12 verlaufenden inneren Deckband 20 angeordneten und einstückig mit der Laufschaufel 14 ausgebildeten Profilkörper 22 aufweist. Die in radialer Richtung maximale Tiefe der Fuge 21 der Laufschaufel 14 wird durch die Unterseite des inneren Deckbands 20 gebildet, dem Fugengrund 24. Der zahn- bzw. sägezahnförmige Profilkörper 22 ist in axialer Richtung zwischen der Fugenwand 23 der Fuge 21 und dem Tannenbaumfuß 15 angeordnet und erstreckt sich vorliegend über eine gesamte Breite der Fuge 21. Alternativ hierzu kann sich der Profilkörper 22 auch nur über einen Bereich der Breite der Fuge 21 erstrecken.

Bezogen auf eine Erstreckung der Laufschaufel 14 in Umfangsrichtung ist der Profilkörper 22 in einem mittigen Bereich angeordnet, so dass in den Seitenbereichen der Fuge 21 diese an die Seitenflächen der Laufschaufel 14 anschließt.

Der Profilkörper 22 der Fuge 21 bildet eine sich im Querschnitt aus vorliegend drei geradlinig verlaufenden Laufschaufelkanten 25, 26, 27 zusammensetzende Kontur 35. Eine erste Laufschaufelkante 25 erstreckt sich ausgehend von einem in radialer Richtung am weitesten von dem Fugengrund 24 entfernten Punkt S1 mit einem Winkel gegenüber dem inneren Deckband 20 der Laufschaufel 14, so dass die erste Laufschaufelkante 25 vorliegend in gleicher Weise wie eine in axialer Richtung äußere Fugenwand 23 der Fuge 21 gegenüber dem inneren Deckband 20 geneigt ist. Die erste Laufschaufelkante 25 weist dementsprechen einen Winkel gegenüber einer Tangente des Umfangkreises des inneren Deckbands 20 auf, welche durch einen Mittelpunkt des Fugengrundes 24 in Umfangsrichtung läuft.

Der Punkt S1 stellt einen Schnittpunkt der ersten Laufschaufelkante 25 mit einer zweiten Laufschaufelkante 26 dar, welche zusammen einen dreiecksförmigen Bereich 37 des Profilkörpers 22 bilden. Der Schnittpunkt S1 befindet sich in einem Randbereich der Fuge 21 der Laufschaufel 14. Zwischen der ersten Laufschaufelkantc 25 und der zweiten Laufschaufelkante 26 ist ein Winkel von vorliegend etwa 90° vorgesehen. Der Profilkörper 22 wird im Querschnitt von einer dritten Laufschaufelkante 27 komplettiert, welche zwischen der ersten Laufschaufelkante 25 und dem Fugengrund 24 verläuft.

Aus der geneigten Ausführung der ersten Laufschaufelkante 25 des Profilkörpers 22 resultiert ein linearer Anstieg einer den Profilkörper 22 umfassenden Dicke der Plattform 20 ausgehend von einem Schnittpunkt S3 der ersten Laufschaufelkante 25 mit der dritten Laufschaufelkante 27 in Richtung des Schnittpunkts S1.

Sämtliche Laufschaufeln 14 sind vorliegend mit jeweils einer Fuge 21 und einem vorbeschriebenen Profilkörper 22 ausgebildet, wobei jeder Profilkörper 22 in Einbauposition des Sicherungsrings 1.8 mit einem sich in Umtangsrichtung über drei Laufschaufeln 14 erstreckenden Sicherungssegment 17 zusammenwirkt.

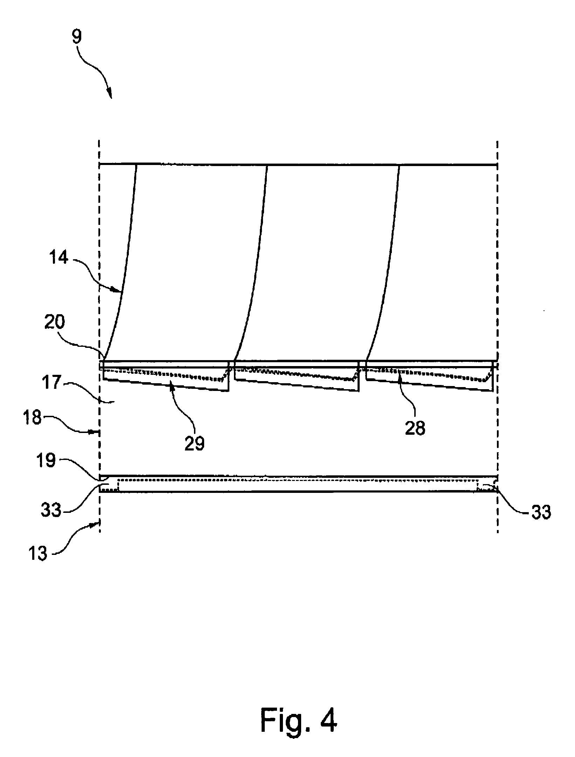

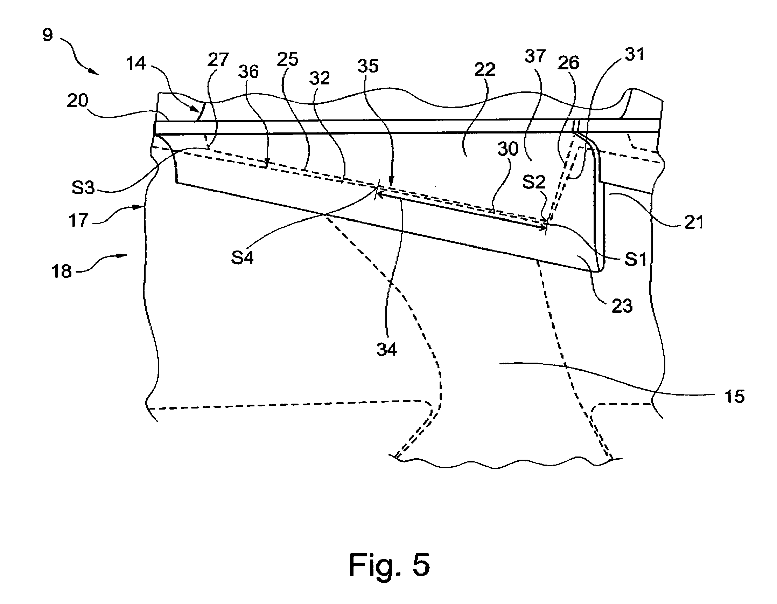

Die Sicherungssegmente 17 weisen hierzu ein Sägezahnprofil 28 mit drei Sägezähnen 29 auf, wobei zwischen jeweils einem Profilkörper 22 der Laufschaufeln 14 und einem Sägezahn 29 des Sicherungssegments 17 ein eine Relativbewegung zwischen den Laufschaufeln 14 und des Sicherungssegments 17 verhindernder Formschluss vorliegt. Fig. 4 und Fig. 5 zeigen jeweils ein Sicherungssegment 17 und zumindest Bereiche von Laufschaufeln 14 und des Scheibenrades 13 in vereinfachter Darstellung. Eine Krümmung der Fuge 19 und des inneren Deckbandes 20 und des Sicherungssegments 17 in Umfangsrichtung der Rotorvorrichtung 9 ist in Fig. 3 bis Fig. 5 nicht näher gezeigt, wobei die Krümmungen an die Krümmung der äußeren Oberfläche des Scheibenrades 13 wenigstens annähernd angepasst und im Wesentlichen konzentrisch zur Triebswerksachse 12 ausgebildet sind.

Zwischen jeweils zwei Sägezähnen 29 des Sicherungssegments 17 ist eine dreiecksförmige Aussparung 38 vorgesehen, welche zur Verhinderung einer Relativbewegung zwischen dem Sicherungssegment 17 und der Laufschaufel 14 mit dem einen Anschlag für die dreiecksförmige Aussparung 38 zwischen zwei Sägezähnen 29 bildenden dreieckigen Bereich 37 des Profilkörpers 22 der Laufschaufel 14 formschlüssig zusammenwirkt. Im Querschnitt ist der Sägezahn 29 des Sicherungssegments 17 mit mindestens drei eine den Laufschaufeln 14 zugewandte Kontur 36 bildenden geradlinigen Kanten 30, 31, 32 ausgebildet.

Die Kontur 36 des Sicherungssegments 17 weist eine erste Sicherungssegmentkante 30 auf, welche in Einbauposition des Sicherungssegments 17 parallel zu der ersten Laufschaufelkante 25 verläuft. Die dreiecksförmige Aussparung 38 zwischen zwei Sägezähnen 29 wird in den Querschnittsansicht von der ersten Sicherungssegmentkante 30 zusammen mit einer zweiten Sicherungssegmentkante 31 gebildet, welche über einen Schnittpunkt S2 miteinander verbunden sind.

Ein den Schnittpunkt S2 der ersten Sicherungssegmentkante 30 und der zweiten Sicherungssegmentkante 31 umfassender Bereich des Sicherungssegments 17 wirkt in Einbauposition des Sicherungssegments 17 mit dem Anschlag der Laufschaufel 14 im Bereich des Schnittpunkts S1 der ersten Laufschaufelkante 25 mit der zweiten Laufschaufelkante 26 derart zusammen, dass eine Verschiebung des Sicherungssegments 17 in Umfangsrichtung während eines Betriebs der Rotorvorrichtung 9 relativ zu der Laufschaufel 14 verhindert ist. Die zweite Sicherungssegmentkante 31 weist in Einbauposition einen kleinen Winkel gegenüber der zweiten Laufschaufelkante 26 auf, so dass zwischen diesen Kanten 26, 31 ein sich ausgehend von den Schnittpunkten S1 und S2 vergrößernder Abstand vorliegt und sichergestellt wird, dass der Anschlag im Bereich des Schnittpunkts S1 liegt.

An ein der zweiten Sicherungssegmentkante 31 abgewandtes Ende der ersten Sicherungssegmentkante 30 schließt sich eine dritte Sicherungssegmentkante 32 an, welche in Einbauposition des Sicherungssegments 17 gegenüber der ersten Laufschaufelkante 25 ebenfalls einen kleinen Winkel aufweist, so dass zwischen der ersten Laufschaufelkante 25 und der dritten Sicherungssegmentkante 32 ausgehend von einem Schnittpunkt S4 der ersten Sicherungssegmentkante 30 mit der dritten Sicherungsegmentkante 32 ein sich stetig vergrößernder Abstand vorliegt.

Die dritte Sicherungssegmentkante 32 erstreckt sich in Einbauposition des Sicherungssegments 17 bis nahe an die Unterkante des inneren Deckbands 20 der Laufschaufel 14 und über einen Übergangsbereich zwischen benachbarten Laufschaufeln 14 hinaus, so dass hierdurch eine gute Abdichtung des Übergangsbereichs der Laufschaufeln 14 geschaffen ist.

An die dritte Sicherungssegmentkante 32 wiederum schließt sich eine zweite Sicherungssegmentkante 31 eines weiteren Sägezahns 29 desselben oder eines benachbarten Sicherungssegments 17 an, welcher im Wesentlichen vergleichbar zu dem beschriebenen Sägezahn 29 ausgebildet ist.

Die erste Sicherungssegmentkante 30 bildet zusammen mit der ersten Laufschaufelkante 25 in Einbauposition einen Kontaktbereich 34 zwischen dem Sicherungssegment 17 und der Laufschaufel 14. Der Kontaktbereich 34 erstreckt sich von dem in radialer Richtung am weitesten von dem Fugengrund 24 entfernten Punkt S1 der Kontur 35 der Fuge 21 der Laufschaufel 14, welcher einen Anfangspunkt des Kontaktbereichs 34 festlegt, bis zu dem Schnittpunkt S4 der ersten Sicherungssegmentkante 30 mit der dritten Sicherungssegmentkantc 32.

Über diesen definierten Kontaktbereich 34 stützen sich die Sicherungssgegmente 17 im Betrieb des Strahltriebwerks 1 unter einer Gewichtskraft auf einer oder mehreren Laufschaufeln 14 ab und übertragen insbesondere in radialer Richtung wirkende Kräfte auf die Laufschaufel 14. Die Kräfte entstehen aufgrund von hohen Drehzahlen im Betrieb des Triebwerkes 1 und erzeugen insbesondere im Bereich der Tannenbaumfüße 15 der Laufschaufeln 14 große Gegenkräfte.

Um Biegespannungen zu verhindern, welche durch eine außermittige Anordnung einer tatsächlichen Kontaktfläche zwischen den Sicherungssegmenten 17 und den Laufschaufeln 14 bezüglich des Tannenbaumfußes 15 entstehen können, sind die Tannenbaumfüße 15 der Laufschaufeln 14 im Wesentlichen in Umfangsrichtung mittig zu einem Mittelpunkt M des Kontaktbereichs 34 der Sicherungssegmente 17 mit den Laufschaufeln 14 angeordnet.

Der Kontaktbereich 34 zwischen der Laufschaufel 14 und dem Sicherungssegment 17 kann dabei durch eine entsprechende Anordnung des Schnittpunkts S1 und einer Länge der ersten Sicherungssegmentkante 30 in Umfangsrichtung wie gewünscht positionicrt werden, um einen gewünschten Krafteinleitungsbereich zu erzielen.

In radialer Richtung betrachtet weisen die Fuge 21 der Laufschaufel 14 und das Sicherungssegment 17 einander zuweisende Oberflächen auf, welche in den Querschnittsansichten durch die Laufschaufelkanten 25, 26, 27 und die Sicherungssegmentkanten 30, 31, 32 dargestellt sind. Die jeweiligen Schnittpunkte S1, S2, S3, S4 der Kanten 25, 26, 27, 30, 31, 32 stellen in axialer Richtung verlaufende Kanten der Oberflächen dar, wobei die von den Schnittpunkten S1 und S2 gebildeten Kanten bei eingebautem Sicherungssegment 17 wenigstens annähernd aneinander anliegen. Die die erste Laufschaufelkante 25 umfassende, im Wesentlichen plane Oberfläche der Laufschaufel 14 verläuft im Wesentlichen parallel zu der der die erste Sicherungssegmentkante 30 umfassende, im Wesentlichen planen Oberfläche des Sicherungssegments 17 und bildet mit dieser eine den Kontaktbereich 34 umfassende Kontaktfläche, in deren Bereich eine Kraftübertragung zwischen dem Sicherungssegment 17 und der Laufschaufel 14 stattfindet.

Neben der Überdeckung eines Spalts zwischen zwei benachbarten Laufschaufeln 14 von den Sicherungssegmenten 17 wird das Scheibenrad 13 auch durch die inneren Deckbänder 20 der Laufschaufeln 14 vor dem heißen Gas im Triebwerk 1 geschützt. Um einen besonders sicheren Schutz des Scheibenrades 13 vor dem heißen Gas zu gewährleisten, sind zur zusätzlichen Abdichtung zwischen zwei benachbarten Laufschaufeln 14 im Bereich der jeweiligen Plattform nicht näher ersichtliche Dichtungs- und/oder Dämpfungselemente, insbesondere sogenannte Dichtungdrähte, vorgesehen, durch welche das meist aus einem temperaturempfindlichen Material hergestellte Scheibenrand 13 zusätzlich geschützt wird.

Ein Einbau der Sicherungssegmente 17 erfolgt im Wesentlichen wie bei bekannten Lösungen, wobei der Sicherungsring 18 zur Herstellung eines Ringschlusses für den gesamten Laufschaufelsatz in bekannter Weise vorgebogene Teilstücke aufweist. Die Sicherungssegmente 17 werden in Umfangsrichtung in die Fugen 19, 21 der Laufschaufeln 14 und des Scheibenrades 13 eingeführt. Um die Sicherungssegmente 17 in radialer Richtung in ihrer Lage zu sichern, weisen die Sicherungssegmente 17 in der Fuge 19 des Scheibenrades 13 zugewandten Bereichen jeweils wenigstens einen als Lippe 33 ausgebildeten Fortsatz auf, welcher nach Einführung der Sicherungssegmente 17 in die Fugen 19, 21 aufgebogen wird, so dass eine radiale Erstreckung der Sicherungssegmente 17 in der in die Fugen 19, 21 eingeführten Position größer als in einer zur Einführung in die Fugen 19, 21 vorgesehenen Position ist. Hierdurch wird ein Spiel der Sicherungssegmente 17 in radialer Richtung eliminiert und die Sicherungssegmente 17 werden in radialer Richtung fest in den Fugen 19, 21 festgelegt. Vorliegend weist das sich über drei Laufschaufeln 14 erstreckende Sicherungssegment 17 zwei Lippen 33 auf, welche jeweils in Umfangsrichtung in einem Seitenbereich des Sicherungssegments 17 angeordnet sind.

Alternativ hierzu kann in Umfangsrichtung der Fuge 19 des Scheibenrades 13 ein beispielsweise als Draht ausgebildetes Abstandselement eingeführt werden.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Scheibenrad
- 14: Laufschaufel
- 15: Tannenbaumfuß
- 16: Ausnehmung
- 17: Sicherungssegment
- 18: Sicherungsring
- 19: Fuge des Scheibenrades
- 20: inneres Deckband der Laufschaufel
- 21: Fuge der Laufschaufel
- 22: Profilkörper
- 23: Fugenwand
- 24: Fugengrund
- 25: erste Laufschaufelkante
- 26: zweite Laufschaufelkante
- 27: dritte Laufschaufelkante
- 28: Sägezahnprofil
- 29: Sägezahn
- 30: erste Sicherungssegmentkante
- 31: zweite Sicherungssegmentkante
- 32: dritte Sicherungssegmentkante
- 33: Lippe
- 34: Kontaktbereich
- 35: Kontur der Fuge der Laufschaufel
- 36: Kontur des Sicherungssegments
- 37: dreiecksförmiger Bereich des Profilkörpers
- 38: dreiecksförmiger Bereich des Sicherungssegments
- M: Mittelpunkt des Kontaktbereichs
- S1 bis S4: Schnittpunkt

## Patentansprüche

1. Rotorvorrichtung für ein Strahltriebwerk (1) mit einem Scheibenrand (13) und mehreren mit dcm Scheibenrad (13) verbundenen Laufschaufeln (14), wobei die Laufschaufeln (14) jeweils über einen Schaufelfuß (15) in im Wesentlichen axialer Richtung in Ausnehmungen (16) des Scheibenrades (13) angeordnet sind, und wobei zur axialen Sicherung der Laufschaufeln (14) in den Ausnehmungen (16) des Scheibenrades (13) mehrere Sicherungssegmente (17) vorgcsehen sind, welche einerseits in definierten Kontaktbereichen (34) mit Fugen (21) der Laufschaufeln (14) und andererseits mit wenigstens einer Fuge (19) des Scheibenrades (13) zusammenwirken, dadurch gekenntzeichnet, dass im Bereich der Fuge (21) wenigstens einer der Laufschaufeln (14) zwischen der Fuge (21) der Laufschaufel (14) und einem Sicherungssegment (17) ein eine Relativbewegung zwischen den Laufschaufeln (14) und den Sicherungssegmenten (17) verhindernder Formschluss vorliegt.

2. Rotorvorrichtung nach Anspruch 1, **dadurch gekennzeichnet, dass** ein einem Sicherungssegment (17) zugewandter Bereich der Fuge (21) der Laufschaufel (14) mit einem insbesondere zahnförmigen Profilkörper (22) ausgebildet ist.

3. Rotorvorrichtung nach Anspruch 2, **dadurch gekennzeichnet, dass** der Profilkörper (22) einen dreiecksförmigen Bereich (37) aufweist, der einen eine Relativbewegung zwischen der Laufschaufel (14) und dem Sicherungssegment (17) verhindernden Anschlag für eine mit dem dreiecksförmigen Bereich (37) des Profilkörpers (22) korrelierende dreiecksförmige Aussparung (38) des Sicherungssegments (17) bildet.

4. Rotorvorrichtung nach Anspruch 3, **dadurch gekennzeichnet, dass** der dreiecksförmige Bereich des Profilkörpers (22) im Querschnitt von sich in einem Schnittpunkt (S1) schneidenden Laufschaufelkanten (25, 26) gebildet ist, wobei eine erste Laufschaufelkante (25) in Umfangsrichtungsrichtung der Laufschaufel (14) gegenüber einer Plattform (20) den Laufschaufel (14) geneigt ist und eine zweite Laufschaufelkante (26) sich ausgehend von dem in radialer Richtung von einem Fugengrund (24) am weitesten erstreckender Schnittpunkt (S1) der Laufschaufelkanten (25, 26) in Richtung des Fugengrundes (24) erstreckt, und wobei die dreiecksförmige Aussparung des Sicherungssegments (17) im Querschnitt von zwei sich in einem Schnittpunkt (S2) schneidenden Sicherungssegmentkanten (30, 31) gebildet wird und der Profilkörper (22) zur Verdrehsicherung der Laufschaufel (14) relativ gegenüber dem Sicherungssegment (17) im Bereich des Schnittpunktes (S1) einen Anschlag für das Sicherungssegment (17) bildet und in diesem Bereich wenigstens annähernd mit einem den Schnittpunkt (S2) des Sicherungssegments (17) umfassenden Bereich des Sicherungssegments (17) zusammenwirkt.

5. Rotorvorrichtung nach Anspruch 4, **dadurch gekennzeichnet, dass** die erste Sicherungssegmentkante (30) des Sicherungssegments (17) zur Bildung des Kontaktbereichs (34) zwischen der Laufschaufel (14) und dem Sicherungssegment (17) bereichsweise parallel zu der ersten Laufschaufelkante (25) der Lautschaufel (14) verläuft.

6. Rotorvorrichtung nach Anspruch 5, **dadurch gekennzeichnet, dass** ein Mittelpunkt (M) des Kontaktbereichs (34) der ersten Sicherungssegmentkante (30) und der ersten Laufschaufelkante (25) wenigstens annähernd mittig zu dem Schaufelfuß (15) der Laufschaufeln (14) in Umfangsrichtung der Rotorvorrichtung (9, 10, 11) angeordnet ist.

7. Rotorvorrichtung nach einem der Ansprüche 4 bis 6, **dadurch gekennzeichnet, dass** das Sicherungssegment (17) im Querschnitt eine dritte Sicherungssegmentkante (32) aufweist, welche sich in bezüglich des Schnittpunktes (S2) der ersten Sicherungssegmentkante (30) und der zweiten Sicherungssegmentkante (31) abweisender Richtung an die erste Sicherungssegmentkante (30) anschließt, wobei die dritte Sicherungssegmentkante (32) zu der ersten Laufschaufelkante (25) beabstandet verläuft.

8. Rotorvorrichtung nach Anspruch 7, **dadurch gekennzeichnet, dass** die dritte Sicherungssegmentkante (32) sich in Umfangsrichtung der Rotorvorrichtung (9, 10, 11) über einen Übergangsbereich von benachbarten Laufschaufeln (14) hinauserstreckt.

9. Rotorvorrichtung nach einem der Ansprüche 4 bis 8, **dadurch gekennzeichnet, dass** die zweite Sicherungssegmentkante (31) zu der zweiten Laufschaufelkante (26) beabstandet verläuft.

10. Rotorvorrichtung nach einem der Ansprüche 4 bis 9, **dadurch gekennzeichnet, dass** eine, insbesondere alle Kanten (25, 26, 27, 30, 31, 32) der Laufschaufel (14) und/oder des Sicherungssegments (17) wenigstens annähernd geradlinig verläuft bzw. verlaufen.

11. Rotorvorrichtung nach einem der Ansprüche 2 bis 10, **dadurch gekennzeichnet, dass** mehrere, insbesondere alle Laufschaufeln (14) eine Fuge (21) mit einem Profilkörper (22) aufweisen und jeweils mit einem eine dreiecksförmige Aussparung (38) umfassenden Bereich (29) eines Sicherungssegments (17) zusammenwirken, wobei sich ein Sicherungssegment (17) vorzugsweise über mehrere, insbesondere zwei oder drei Laufschaufeln (14) erstreckt.

12. Rotorvorrichtung nach einem der Ansprüche 1 bis 11, **dadurch gekennzeichnet, dass** wenigstens ein Sicherungssegment (17) in einem der Fuge (19) des Scheibenrades (13) zugewandten Bereich wenigstens einen Fortsatz (33) aufweist, welcher zwischen einer zur Einführung des Sicherungssegments (17) in die Rotorvorrichtung (9, 10, 11) ersten Position und einer zweiten Position bei eingeführtem Sicherungssegment (17) verlagerbar ist, wobei eine radiale Erstreckung des Sicherungssegments (17) mit dem sich in der zweiten Position befindlichen Fortsatz (33) größer als mit dem sich in der ersten Position befindlichen Fortsatz (33) ist.

13. Rotorvorrichtung nach einem der Ansprüche 1 bis 11, **dadurch gekennzeichnet, dass** in radialer Richtung zwischen dem Sicherungssegment (17) und der Fuge (19) des Scheibenrades (13) ein in Umfangsrichtung der Rotorvorrichtung (9, 10, 11) verlaufendes Abstandselement, insbesondere ein Draht, angeordnet ist.

14. Rotorvorrichtung nach einem der Ansprüche 1 bis 13, **dadurch gekennzeichnet, dass** in axialer Richtung beidseits der Laufschaufeln (14) Sicherungssegmente (17) angeordnet sind, welche jeweils in einer Fuge (21) der Laufschaufeln (14) und wenigstens einer Fuge (19) des Scheibenrades (13) angeordnet sind.

15. Rotorvorrichtung nach einem der Ansprüche 1 bis 14, **dadurch gekennzeichnet, dass** im Bereich eines Spalts zwischen Plattformen (20) von zwei benachbarten Laufschaufeln (14) wenigstens ein Dichtungs- und/oder Dämpfungselement angeordnet ist.
